Europäisches Patentamt

European Patent Office

Office européen des brevets

(19)

(11) Veröffentlichungsnummer: **0 048 868**
**B1**

(12) **EUROPÄISCHE PATENTSCHRIFT**

(45) Veröffentlichungstag der Patentschrift:
29.01.86

(51) Int. Cl.⁴: **H 04 Q 7/04,** H 04 Q 3/00,
H 04 M 3/42

(21) Anmeldenummer: **81107160.4**

(22) Anmeldetag: **10.09.81**

(54) Kommunikationssystem, insbesondere Fernsprechsystem.

(30) Priorität: **26.09.80 DE 3036380**

(43) Veröffentlichungstag der Anmeldung:
**07.04.82 Patentblatt 82/14**

(45) Bekanntmachung des Hinweises auf die Patenterteilung:
**29.01.86 Patentblatt 86/5**

(84) Benannte Vertragsstaaten:
**CH FR GB IT LI NL SE**

(56) Entgegenhaltungen:
**EP - A - 0 009 684**
**DE - A - 2 147 638**
**DE - A - 2 644 301**
**DE - A - 2 659 615**
**FR - A - 2 171 336**
**FR - A - 2 286 565**
**US - A - 3 784 793**

(73) Patentinhaber: **Siemens Aktiengesellschaft, Berlin und München Wittelsbacherplatz 2, D-8000 München 2 (DE)**

(72) Erfinder: **Künzel, Roland, Dipl.-Ing., Irisweg 4, D-8039 Puchheim (DE)**
Erfinder: **Moeller, Wolf-Dietrich, Dr., Ing., Ysenburgstrasse 10, D-8000 München 19 (DE)**
Erfinder: **Watzka, Ludwig, Dipl.-Ing., Sentilostrasse 19, D-8000 München 71 (DE)**

## Beschreibung

Die vorliegende Erfindung betrifft ein Kommunikationssystem, insbesondere Fernsprechsystem mit einem Drahtnetz und einem Funknetz, bei dem eine zentrale oder teilzentrale Speichereinrichtung vorgesehen ist, die jeweils eine Information für alle aktuellen Standorte von mobilen Teilnehmern gespeichert hält, wobei die gespeicherte Standortinformation dazu verwendet wird, zu mobilen Teilnehmern aufzubauende Verbindungen vermittlungsmässig zu steuern, und wobei die Speichereinrichtung dazu verwendet wird, sowohl ankommende als auch abgehende Verbindungen von dem Funknetz oder dem Drahtnetz in das eine oder das andere Netz hinein aufzubauen.

In dem zur Zeit vorhandenen Fernsprechnetz besteht das Problem, dass aufgrund der engen verwaltungsmässigen Kopplung zwischen dem Teilnehmerendgerät und dem Anschlussinhaber eine aktive Benutzung eines fremden Teilnehmerendgerätes (abgehende Verbindung) wegen Abrechnungsproblemen weitgehend, die automatische Erreichbarkeit bei fremden Anschlüssen («passive Nutzung» = ankommende Verbindung) völlig ausscheidet. Im Interesse einer besseren Nutzung des Fernsprechnetzes ist jedoch die freizügige aktive und passive Nutzungsmöglichkeit jedes Teilnehmerendgerätes durch jeden Teilnehmer wünschenswert.

Es ist bereits vorgeschlagen worden, für ein Netz des öffentlich beweglichen Landfunks ein sog. Teilnehmerstandort-Verwaltungssystem vorzusehen, in dessen Dateien ständig die aktuelle Standortinformation von im Betrieb befindlichen Mobilfunkgeräten bzw. mobilen Teilnehmerendgeräten gespeichert ist. Es wurde ausserdem bereits vorgeschlagen, für den Betrieb Benutzerausweise, beispielsweise in Form von Magnetkarten, vorzusehen, die von dem Funkfernsprechgerät gelesen werden können und diesem jeweils die Teilnehmerrufkennung des momentanen Benutzers zuordnen. Bei einem System gemäss diesen Vorschlägen erfasst die Standortbuchführung nicht mehr die Standorte der mobilen Geräte, sondern vielmehr die Standorte der Benutzer. Sog. Überleiteinrichtungen für ein solches mobiles Funkfernsprechsystem sind mit dem Teilnehmerstandort-Verwaltungssystem verbunden und können sich auf diese Art die für einen Verbindungsaufbau notwendige Zielinformation beschaffen. Mit einem solchen System des öffentlich beweglichen Landfunks ist eine Teilnehmermobilität relativ zu den Teilnehmerendgeräten realisiert. Für öffentliche drahtgebundene Fernsprechnetze trifft dies jedoch nicht zu.

Aus der DE-A-2 659 615 ist ein Kommunikationssystem der eingangs genannten Art bekannt. Ausserdem ist aus der DE-A-2 147 638 bekannt, bei einem Teilnehmerendgerät, das die jeweilige rufende oder gerufene Seite repräsentiert, eine Teilnehmerrufnummer-Identifizierung desjenigen mobilen Teilnehmers vorzunehmen, der an dem Ort des betreffenden Teilnehmerendgerätes aktiver oder passiver Benutzer ist. Aus der zuletzt genannten Druckschrift ist auch bekannt, bei dem Teilnehmerendgerät eine Ausweislesevorrichtung vorzusehen, mittels derer ein dem individuellen Teilnehmer zur Verfügung stehender Benutzerausweis, der zumindest eine die Teilnehmerrufkennung betreffende Information enthält, lesbar ist, und dem Teilnehmerendgerät die dem jeweiligen Benutzerausweis zugeteilte Teilnehmerrufkennung zuzuordnen, wobei eine Vielzahl von Benutzerausweisen eingelesen werden kann.

Der vorliegenden Erfindung liegt die Aufgabe zugrunde, ein Kommunikationssystem, insbesondere Fernsprechsystem, zu schaffen, bei dem eine zentrale oder teilzentrale, ortsfeste Speichereinrichtung vorgesehen ist, die jeweils eine Information für alle aktuellen Standorte von mobilen Teilnehmern gespeichert hält und bei dem die gespeicherte Standortinformation dazu verwendet wird, zu mobilen Teilnehmern hin aufzubauende Verbindungen vermittlungsmässig zu steuern, wobei auch Teilnehmer, die an ein drahtgebundenes Netz angeschlossen sind, den gleichen Grad an Mobilität, nämlich die passive Erreichbarkeit, wie die mobilen Teilnehmer eines Funksystems haben können. Es ist ausserdem Aufgabe für die Erfindung, auch für abgehende Verbindungsaufbauten eine Lösung anzugeben, durch die das Problem der Gebührenverrechnung, das bekanntlich in bekannten Systemen durch eine Zuordnung der Gebühr zu der Teilnehmerstation und nicht etwa zu der Rufkennung des Benutzers gelöst ist, zu ermöglichen.

Die der vorliegenden Erfindung zugrundeliegende Aufgabe wird durch ein Kommunikationssystem gemäss dem Oberbegriff des Hauptanspruchs gelöst, das dadurch gekennzeichnet ist, dass bei einem Teilnehmerendgerät, das die jeweilige rufende oder gerufene Seite repräsentiert, eine Teilnehmerrufnummer-Identifizierung desjenigen mobilen Teilnehmers vorgenommen wird, der an dem Ort des betreffenden Teilnehmerendgerätes aktiver oder passiver Benutzer ist, wozu bei dem Teilnehmerendgerät eine Ausweislesevorrichtung vorgesehen ist, mittels derer ein dem individuellen Teilnehmer zur Verfügung stehender Benutzerausweis, der zumindest eine die Teilnehmerrufkennung betreffende Information enthält, lesbar ist, dass dem Teilnehmerendgerät die dem jeweiligen Benutzerausweis zugeteilte Teilnehmerrufkennung zugeordnet wird, wobei eine Vielzahl von Benutzerausweisen eingelesen werden kann und wobei dem Teilnehmerendgerät ausserdem eine individuelle Teilnehmerendgerät-Rufkennung fest zugeordnet ist, dass die eingelesene Teilnehmerrufkennung zusammen mit einer die benutzte Ausweislesevorrichtung kennzeichnenden Standortkennung zu der Speichereinrichtung übertragen und dort wie in dem Teilnehmerendgerät gespeichert wird, dass die Standortkennung in den betreffenden Speicherplätzen durch eine neue Standortkennung dadurch automatisch überschrieben werden kann, dass der Informationsinhalt des Benutzerausweises in eine andere Ausweislesevorrichtung eingelesen wird, dass die zentrale oder teilzentrale, landfeste Speichereinrichtung sendet, womit die Standortkennung zusammen mit der Teilnehmerrufkennung bzw. nur die Teilnehmerrufkennung gelöscht wird, und dass die jeweils eingelesene Teilnehmerrufkennung zusätzlich in dem betreffenden Teilnehmerendgerät gespeichert und dazu verwendet wird, teilnehmerbezogene Vermittlungs- und/oder Prüfprozeduren durchzuführen.

Die vorliegende Erfindung bietet den Vorteil, dass eine vollständige Mobilität der Benutzer sowohl drahtgebundener Anschlüsse als auch über Funkverbindungen anschaltbarer Teilnehmerendgeräte bei gleichzeitiger automatischer Gebührenverrechnung für den eigentlichen Benutzer gegeben ist.

Diese vorteilhafte Teilnehmermobilität relativ zum Teilnehmergerät sowohl im Funkfernsprechnetz als auch im Drahtfernsprechnetz wird durch Verwendung eines einheitlichen Ausweises ermöglicht. Ein rufender Teilnehmer braucht vorteilhafterweise nicht zu wissen, ob sich der gerufene Teilnehmer im Funkfernsprechnetz oder im Drahtnetz aufhält. Die Einrichtung dieses globalen Leistungsmerkmals «Mobilität» lässt sich wegen der dort vorhandenen Signalisierungsmöglichkeiten und der Anschlussmöglichkeiten von dienstspezifischen Operationsmoduln vorteilhaft in einem zukünftigen digitalen Fernsprechnetz verwirklichen. Vorteilhafte Weiterbildungen der Erfindung sind durch die in den Unteransprüchen angegebenen Merkmale gekennzeichnet.

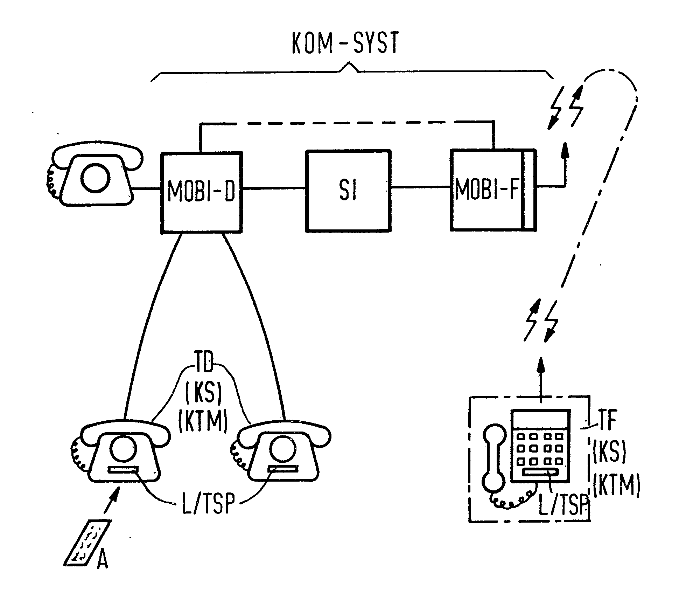

Die Erfindung wird im folgenden an Hand einer, ein Ausführungsbeispiel für die Erfindung betreffenden Figur im einzelnen erläutert. Die Figur zeigt eine schematische Darstellung in Form eines Blockschaltbildes für ein Ausführungsbeispiel des erfindungsgemässen Kommunikationssystems KOM-SYST, bei dem sowohl ein drahtgebundenes Netz MOBI-D als auch ein Funknetz MOBI-F an eine zentrale bzw. teilzentrale, landfeste Speichereinrichtung SI angeschlossen ist. An das drahtgebundene Netz MOBI-D sind Teilnehmerendgeräte TD in Form von herkömmlichen Fernsprechstationen mit integrierten Ausweislesevorrichtungen L angeschlossen. Diese Ausweislesevorrichtungen L weisen einen Aufnahmeschlitz zum Einstecken eines Benutzerausweises A auf. An das Funknetz MOBI-F sind in bekannter Weise über Funkverbindungen mobile Teilnehmerendgeräte TF, beispielsweise Autotelefone, angeschlossen, die ebenfalls eine integrierte Ausweislesevorrichtung L zum Einlesen von auf einem Benutzerausweis gespeicherten Daten aufweisen. Die zentrale bzw. teilzentrale, landfeste Speichereinrichtung SI wird dazu verwendet, sowohl ankommende als auch abgehende Verbindungen von dem Funknetz MOBI-F als auch dem Drahtnetz MOBI-D in das eine oder das andere Netz hinein aufzubauen. In dem Teilnehmerendgerät TD bzw. TF, das die jeweilige rufende oder gerufene Seite repräsentiert, wird zum Zwecke des Verbindungsaufbaus eine Teilnehmerrufnummer-Identifizierung desjenigen mobilen Teilnehmers vorgenommen, der am Ort des betreffenden Teilnehmerendgerätes TD bzw. TF aktiver oder passiver Benutzer ist. Dies geschieht mit Hilfe der Daten, die auf dem diesem Benutzer zur Verfügung stehenden Benutzerausweis A gespeichert sind. Die Ausweislesevorrichtung L liest die Daten eines Benutzerausweises A, auf dem zumindest Daten betreffend eine Teilnehmerrufkennung KTM enthalten sind. Durch den Einlesevorgang für diese Information wird das betreffende Teilnehmerendgerät TD bzw. TF der dem jeweiligen Benutzerausweis A zugeteilten Teilnehmerrufkennung zugeordnet. Es kann eine Vielzahl von Benutzerausweisen A nacheinander eingelesen werden, so dass mehrere Benutzer aktive oder passive Teilnehmer dieses speziellen Teilnehmerendgerätes sein können. Dem betreffenden Teilnehmerendgerät TD bzw. TF wird ausserdem eine individuelle Teilnehmerendgerät-Rufkennung fest zugeordnet. Die eingelesene Teilnehmerrufkennung KTM wird zusammen mit einer die benutzte Ausweislesevorrichtung L kennzeichnenden Standortkennung KS zu der Speichereinrichtung SI übertragen und dort wie in dem Teilnehmerendgerät TD bzw. TF zwischengespeichert. Dazu ist in den Teilnehmerendgeräten ausserdem jeweils eine Endgerät-Speichereinheit TSP vorgesehen.

Diese Standortkennung KS kann gemäss einer vorteilhaften Weiterbildung der Erfindung in den betreffenden Speicherplätzen durch eine neue Standortkennung KS' dadurch automatisch überschrieben werden, dass der Informationsinhalt des Benutzerausweises A in eine andere Ausweislesevorrichtung L eingelesen wird. In diesem Fall sendet die zentrale oder teilzentrale, landfeste Speichereinrichtung SI einen Löschbefehl an die betreffende Endgerät-Speichereinheit TSP, womit die Standortkennung KS zusammen mit der Teilnehmerrufkennung KTM bzw. nur die Teilnehmerrufkennung KTM gelöscht wird. Diese Möglichkeit bietet den Vorteil, dass ein Benutzer seinen Standort wechseln kann, ohne dass er dazu bei dem bisher benutzten Teilnehmerendgerät eine Abmeldung seiner Benutzung vornehmen muss.

Die jeweils eingelesene Teilnehmerrufkennung KTM kann gegebenenfalls zusätzlich in dem betreffenden Teilnehmerendgerät TD bzw. TF gespeichert und dazu verwendet werden, teilnehmerbezogene Vermittlungs- und/oder Prüfprozeduren durchzuführen.

Eine bestimmte Teilnehmerrufkennung KTM ist vorteilhafterweise ausschliesslich einem einzigen Benutzerausweis A zugeordnet. Darüber hinaus ist es vorteilhaft, dass die betreffende Teilnehmerrufkennung KTM ausschliesslich diesem Benutzerausweis A zugeteilt ist, was erhebliche verwaltungstechnische Vorteile mit sich bringt.

Die durch Speicherung der Teilnehmerrufkennung KTM in dem dem Teilnehmerendgerät TD bzw. TF zugeordneten Speicherplatz in der Speichereinrichtung SI, ggf. auch in dem Teilnehmerendgerät TD bzw. TF selbst, vorgenommene Zuordnung der Teilnehmerrufkennung KTM zu dem betreffenden Teilnehmerendgerät TD bzw. TF kann dadurch aufgehoben werden, dass der betreffende Speicherinhalt durch einen Bedienvorgang an dem Teilnehmerendgerät TD bzw. TF gelöscht wird. Dies kann aber vorteilhafterweise gemäss einer Weiterbildung der Erfindung auch dadurch automatisch geschehen, dass am Ende eines vom Zeitpunkt des Einlesevorganges an laufenden, vorbestimmten Zeitabschnittes ein Löschkriterium gewonnen wird, mittels dessen der Löschvorgang automatisch eingeleitet wird.

Der Benutzerausweis A ist vorteilhafterweise als magnetischer Datenträger ausgeführt. Solche Benutzerausweise sind an sich bekannt, vgl. beispielsweise Communications International /Sept. 1979 S. 9. Es sind selbstverständlich auch andere Arten einer Datenspeicherung auf dem Benutzerausweis A möglich, wie beispielsweise die Speicherung der Daten auf holografischem Wege oder dadurch, dass der Benutzerausweis A eine der Datencodierung entsprechend strukturierte Oberfläche aufweist.

Es kann ausserdem ein Benutzerausweis A verwendet werden, in dem ein Chip mit einem Mikroprozessor und einem PROM integriert ist. Ein solcher Benutzerausweis kann vorteilhafterweise betreffend die Benutzungsgebühren nicht nur als herkömmliche Kreditkarte, sondern auch als sog. Guthabenkarte verwendet werden, bei der beispielsweise durch das Teilnehmerendgerät TD bzw. TF Gebühreneinheiten aus dem in das PROM eingelesene «Guthaben» abbuchbar sind.

Eine vorteilhafte Weiterbildung der Erfindung sieht vor, dass ein Wählvorgang nur dann durchgeführt werden kann, wenn der Benutzerausweis A nach Art eines Schlüssels in die Ausweislesevorrichtung L des betreffenden Teilnehmerendgerätes TD, TF gesteckt ist.

Eine andere Weiterbildung der Erfindung sieht vor, dass die Benutzungsgebühr aufgrund des jeweils zuletzt gesteckten Benutzerausweises A unter der Voraussetzung angerechnet wird, dass zuvor von dem betreffenden Benutzer eine Zahltaste gedrückt worden ist.

In dem Kommunikationssystem kann vorgesehen sein, dass eine betreffende Benutzungsgebühr für den Fall, dass kein Benutzerausweis A in die Ausweislesevorrichtung L gesteckt wurde, zu Lasten des Anschlussinhabers geht.

Anstelle des Benutzerausweises A und der Ausweislesevorrichtungen L können auch direkte Verfahren einer Personenidentifikation, beispielsweise durch Identifikation der Sprachmerkmale oder von Fingerabdrücken, eingesetzt werden.

An das drahtgebundene Netz MOBI-D und das Funknetz MOBI-F sind selbstverständlich auch Teilnehmerendgeräte ohne Ausweislesevorrichtung anzuschliessen.

**Patentansprüche**

1. Kommunikationssystem (KOM-SYST), insbesondere Fernsprechsystem, mit einem Drahtnetz (MOBI-D) und einem Funknetz (MOBI-F), bei dem eine zentrale oder teilzentrale, ortsfeste Speichereinrichtung (SI) vorgesehen ist, die jeweils eine Information für alle aktuellen Standorte von mobilen Teilnehmern gespeichert hält, wobei die gespeicherte Standortinformation dazu verwendet wird, zu mobilen Teilnehmern hin aufzubauende Verbindungen vermittlungstechnisch zu steuern, und wobei die Speichereinrichtung (SI) dazu verwendet wird, sowohl ankommende als auch abgehende Verbindungen von dem Funknetz (MOBI-F) oder dem Drahtnetz (MOBI-D) in das eine oder das andere Netz hinein aufzubauen, dadurch gekennzeichnet, dass bei einem Teilnehmerendgerät (TD, TF), das die jeweilige rufende oder gerufene Seite repräsentiert, eine Teilnehmerrufnummer-Identifizierung desjenigen mobilen Teilnehmers vorgenommen wird, der an dem Ort des betreffenden Teilnehmerendgerätes (TD, TF) aktiver oder passiver Benutzer ist, wozu bei dem Teilnehmerendgerät (TD, TF) eine Ausweislesevorrichtung (L) vorgesehen ist, mittels derer ein dem individuellen Teilnehmer zur Verfügung stehender Benutzerausweis (A), der zumindest eine die Teilnehmerrufkennung (KTM) betreffende Information enthält, lesbar ist, dass dem Teilnehmerendgerät (TD, TF) die dem jeweiligen Benutzerausweis (A) zugeteilte Teilnehmerrufkennung (KTM) zugeordnet wird, wobei eine Vielzahl von Benutzerausweisen (A) eingelesen werden kann und wobei dem Teilnehmerendgerät (TD, TF) ausserdem eine individuelle Teilnehmerendgerät-Rufkennung fest zugeordnet ist, dass die eingelesene Teilnehmerrufkennung (KTM) zusammen mit einer die benutzte Ausweislesevorrichtung (L) kennzeichnenden Standortkennung (KS) zu der Speichereinrichtung (SI) übertragen und dort wie in dem Teilnehmerendgerät (TD, TF) gespeichert wird, dass die Standortkennung (KS) in den betreffenden Speicherplätzen durch eine neue Standortkennung (KS') dadurch automatisch überschrieben werden kann, dass der Informationsinhalt des Benutzerausweises (A) in eine andere Ausweislesevorrichtung (L) eingelesen wird, dass die zentrale oder teilzentrale, landfeste Speichereinrichtung (SI) einen Löschbefehl an eine Endgerät-Speichereinheit (TSP) sendet, womit die Standortkennung (KS) zusammen mit der Teilnehmerrufkennung (KTM) bzw. nur die Teilnehmerrufkennung (KTM) gelöscht wird, und dass die jeweils eingelesene Teilnehmerrufkennung (KTM) zusätzlich in dem betreffenden Teilnehmerendgerät (TD, TF) gespeichert und dazu verwendet wird, teilnehmerbezogene Vermittlungs- und/oder Prüfprozeduren durchzuführen.

2. Kommunikationssystem nach Anspruch 1, dadurch gekennzeichnet, dass die Teilnehmerrufkennung (KT) ausschliesslich einem einzigen Benutzerausweis (A) zugeordnet ist.

3. Kommunikationssystem nach Anspruch 1, dadurch gekennzeichnet, dass die Teilnehmerrufkennung (KTM) nur dem Benutzerausweis (A) zugeteilt ist.

4. Kommunikationssystem nach Anspruch 1, dadurch gekennzeichnet, dass die durch Speicherung der Teilnehmerrufkennung (KTM) in dem dem Teilnehmerendgerät (TD, TF) zugeordneten Speicherplatz in der Speichereinrichtung (SI), ggf. auch in dem Teilnehmerendgerät (TD, TF) selbst, vorgenommene Zuordnung der Teilnehmerrufkennung (KTM) zu dem betreffenden Teilnehmerendgerät (TD, TF) dadurch aufgehoben wird, dass der betreffende Speicherinhalt durch einen Bedienvorgang an dem Teilnehmerendgerät (TD TF) gelöscht wird.

5. Kommunikationssystem nach Anspruch 1, dadurch gekennzeichnet, dass die durch Speicherung der Teilnehmerrufkennung (KTM) in dem dem Teilnehmerendgerät (TD, TF) zugeordneten Speicherplatz in der Speichereinrichtung (SI), ggf. auch in dem Teilnehmerendgerät (TD, TF) selbst, vorgenommene Zuordnung der Teilnehmerrufkennung (KTM) zu dem betreffenden Teilnehmerendgerät (TD, TF) dadurch automatisch aufgehoben wird, dass am Ende eines vom Zeitpunkt des Einlesevorganges an laufenden, vorbestimmten Zeitabschnittes ein Löschkriterium gewonnen wird, mittels dessen der Löschvorgang eingeleitet wird.

6. Kommunikationssystem nach Anspruch 1, 2 oder 3, dadurch gekennzeichnet, dass der Benutzerausweis (A) ein magnetischer Datenträger ist.

7. Kommunikationssystem nach Anspruch 1, 2 oder 3, dadurch gekennzeichnet, dass der Benutzerausweis (A) ein holographischer Datenträger ist.

8. Kommunikationssystem nach Anspruch 1, 2 oder 3, dadurch gekennzeichnet, dass der Benutzerausweis (A) ein mit einer strukturierten Oberfläche versehener Datenträger ist.

9. Kommunikationssystem nach Anspruch 6, 7 oder 8, dadurch gekennzeichnet, dass in den Benutzerausweis (A) ein Chip mit einem Mikroprozessor und einem PROM integriert ist.

10. Kommunikationssystem nach einem der Ansprüche 1 bis 9, dadurch gekennzeichnet, dass der Benutzerausweis (A) mittelbar auch für eine Benutzungsgebührenabrechnung verwendet wird.

11. Kommunikationssystem nach einem der Ansprüche 1 bis 10, dadurch gekennzeichnet, dass ein Wählvorgang nur dann durchgeführt werden kann, wenn der Benutzerausweis (A) in die Ausweislesevorrichtung (L) des betreffenden Teilnehmerendgerätes (TD, TF) gesteckt ist.

12. Kommunikationssystem nach einem der Ansprüche 1 bis 10, dadurch gekennzeichnet, dass die Benutzungsgebühr aufgrund des jeweils zuletzt gesteckten Benutzerausweises (A) unter der Voraussetzung angerechnet wird, dass zuvor von dem betreffenden Benutzer eine Zahltaste gedrückt worden ist.

## Claims

1. A communications system (KOM-SYST), in particular a telephone system, having a wire network (MOBI-D) and a radio network (MOBI-F), wherein is provided a central or a sub-central, stationary storage device (SI) which respectively contains an item of information for all actual locations of mobile subscribers, where the stored location information is used to control connections, which are to be established to mobile subscribers, in an exchange-oriented fashion, and wherein the storage device (SI) is used to establish both incoming and also outgoing connections from the radio network (MOBI-F) or the wire network (MOBI-D) into the one or the other network, characterised in that in a subscriber terminal device (TD, TF) which represents the respective calling or called side, a subscriber call number identification is carried out of that mobile subscriber, who is an active or passive user at the location of the respective subscriber terminal device (TD, TF), for which purpose an identification card reading device (L) is arranged in the subscriber terminal device (TD, TF), by means of which device (L) a user identification card (A), which is available to the individual subscriber and which at least includes one item of information concerning the subscriber call identification (KTM), can be read, that the subscriber terminal device (TD, TF) is assigned the subscriber call identification (KTM) which is allocated to the respective user identification card (A), where a plurality of user identification cards (A) can be read in and where the subscriber terminal device (TD, TF) is further firmly assigned an individual subscriber terminal device call identification, that the read-in subscriber call identification (KTM) together with a location identification (KS), which identifies the used identification card reading device (L) is transmitted to the storage device (SI) and stored as in the subscriber terminal device (TD, TF), that the location identification (KS) in the respective storage places can be automatically transferred by a new location identification (KS') in that the information content of the user identification card (A) is read into another identification card reading device (L), that the central or sub-central, stationary storage device (SI) transmits an erase instruction to a terminal device storage unit (TSP), whereby the location identification (KS) together with the subscriber call identification (KTM) or only the subscriber call identification (KTM) is erased, and that the respective read-in subscriber call identification (KTM) is additionally stored in the respective subscriber terminal device (TD, TF) and used to carry out subscriber-related switching and/or testing procedures.

2. A communications system as claimed in claim 1, characterised in that the subscriber call identification (KT) is exclusively assigned to one single user identification card (A).

3. A communications system as claimed in claim 1, characterised in that the subscriber call identification (KTM) is assigned only to the user identification card (A).

4. A communications system as claimed in claim 1, characterised in that the allocation of the subscriber call identification (KTM) to the respective subscriber terminal device (TD, TF), which allocation is carried out by storing the subscriber call identification (KTM) in the storage place which is assigned to the subscriber terminal device (TD, TF) in the storage device (SI), possibly in the subscriber terminal device (TD, TF) itself, is cancelled in that the respective storage content is erased by a control operation at the subscriber terminal device (TD, TF).

5. A communications system as claimed in claim 1, characterised in that the allocation of the subscriber call identification (KTM) to the respective subscriber terminal device (TD, TF), which allocation is carried out by storing the subscriber call identification (KTM) in the storage place which is assigned to the subscriber terminal device (TD, TF) in the storage device (SI), possibly in the subscriber terminal device (TD, TF) itself, is automatically cancelled in that at the end of a predetermined time interval starting at the time of the read-in process, an erase criterion is obtained, by means of which the erasing process is initiated.

6. A communications system as claimed in claim 1, 2 or 3, characterised in that the user identification card (A) is a magnetic data carrier.

7. A communications system as claimed in claims 1, 2 or 3, characterised in that the user identification card (A) is a holographic data carrier.

8. A communications system as claimed in claim 1, 2 or 3, characterised in that the user identification card (A) is a data carrier which is provided with a structured surface.

9. A communications system as claimed in claim 6, 7 or 8, characterised in that a chip, with a microprocessor and a PROM, is integrated into the user identification card (A).

10. A communications system as claimed in one of claims 1 to 9, characterised in that the user identification card (A) is indirectly used for a charge calculation.

11. A communications system as claimed in one of claims 1 to 10, characterised in that a dialling process can only be carried out if the user identification card (A) is inserted into the identification card reading device (L) of the respective subscriber terminal device (TD, TF).

12. A communications system as claimed in one of claims 1 to 10, characterised in that the rate is charged on the basis of the respective last inserted user identification card (A) provided that a digit key has been previously pressed by the respective user.

## Revendications

1. Système de communication (KOM-SYST), notamment système téléphonique, comportant un réseau câblé (MOBI-D) et un réseau hertzien (MOBI-F) et dans lequel il est prévu un dispositif de mémoire fixe (SI), central ou partiellement central et qui conserve à l'état mémorisé respectivement une information pour toutes les positions actuelles d'abonnés mobiles, l'information mémorisée de position étant utilisée pour commander, du point de vue de la technique des communications, des liaisons devant être établies avec des abonnés mobiles, et le dispositif de mémoire (SI) étant utilisé pour établir aussi bien des liaisons d'arrivée que des liaisons de départ depuis le réseau hertzien mobile (MOBI-F) ou depuis le réseau câblé (MOBI-D) dans l'un ou l'autre réseau, caractérisé par le fait que dans le cas d'un poste terminal d'abonné (TD, TF) qui représente le côté respectif appelant ou appelé, il se produit une identification du numéro d'appel de l'abonné mobile qui est un utilisateur actif sur le lieu du poste terminal d'abonné (TD, TF) considéré, auquel cas il est prévu, sur le poste terminal d'abonné (TD, TF) un dispositif (L) de lecture de cartes d'identité à l'aide duquel une carte d'identité (A) d'un utilisateur, dont dispose l'abonné individuel et qui contient au moins une information concernant l'indicatif (KTM) d'appel de l'abonné, peut être lue, que l'indicatif (KTM) d'appel de l'abonné, affecté à la carte d'identité respective (A) de l'utilisateur, est associé au poste terminal d'abonné (TD, TF), auquel cas un grand nombre de cartes d'identité (A) d'utilisateurs peuvent être lues et en outre un indicatif d'appel individuel d'un poste de terminal d'abonné est associé de façon fixe au poste terminal d'abonné (TD, TF), que l'indicatif (KTM) lu d'appel d'abonné ainsi qu'un indicatif de lieu (KS) caractérisant le dispositif (L) utilisé de lecture de cartes d'identité sont transmis au dispositif de mémoire (SI) et y sont mémorisés dans le poste terminal d'abonné (TD, TF), qu'un nouvel indicatif de lieu (KS') peut être enregistré automatiquement en surinscription sur l'indicatif de lieu (KS) situé dans les cases de mémoire concernées par le fait que le contenu en informations de la carte d'identité (A) de l'utilisateur est lu dans un autre dispositif (L) de lecture de cartes d'identité, que le dispositif de mémoire (SI) central ou partiellement central, fixe au sol, envoie une instruction d'effacement à une unité de mémoire (TSP) d'un poste terminal, avec pour effet que l'indicatif de lieu (KS) ainsi que l'indicatif (KTM) d'appel d'abonné sont effacés ou bien seul cet indicatif (KTM) d'appel d'abonné est effacé et que l'indicatif (KTM) respectivement lu d'appel d'abonné est mémorisé en supplément dans le poste terminal d'abonné concerné (TD, TF) et est utilisé pour réaliser des procédures de commutation et/ou de contrôle rapportées à l'abonné.

2. Système de communication suivant la revendication 1, caractérisé par le fait que l'indicatif (KTM) d'appel d'abonné est associé exclusivement à une seule carte d'identité (A) d'un utilisateur.

3. Système de communication suivant la revendication 1, caractérisé par le fait que l'indicatif (KTM) d'appel d'abonné n'est affecté qu'à la carte d'identité (A) d'un abonné.

4. Système de communication suivant la revendication 1, caractérisé par le fait que l'association de l'indicatif (KTM) d'appel d'abonné, qui est réalisée par mémorisation de cet indicatif (KTM) dans la case de mémoire associée au poste terminal d'abonné (TD, TF) dans le dispositif de mémoire (SI), éventuellement également dans le poste terminal d'abonné (TD, TF) lui-même, au poste terminal d'abonné (TD, TF) considéré est supprimée par le fait que le contenu concerné de la mémoire est effacé par un processus de commande dans le poste terminal d'abonné (TD, TF).

5. Système de communication suivant la revendication 1, caractérisé par le fait que l'association de l'indicatif (KTM) d'appel d'abonné, réalisé par mémorisation de cet indicatif (KTM) dans la case de mémoire, associée au poste terminal d'abonné (TD, TF) dans le dispositif de mémoire (SI), éventuellement également dans le poste terminal d'abonné (TD, TF) lui-même, au poste terminal d'abonné (TD, TF) considéré est supprimée de façon automatique par le fait qu'à la fin d'un intervalle de temps prédéterminé partant de l'instant du processus de lecture se trouve délivré un critère d'effacement à l'aide duquel le processus d'effacement est déclenché.

6. Système de communication suivant la revendication 1, 2 ou 3, caractérisé par le fait que la carte d'identité (A) de l'utilisateur est un support magnétique de données.

7. Système de communication suivant la revendication 1, 2 ou 3, caractérisé par le fait que la carte d'identité (A) de l'utilisateur est un support holographique de données.

8. Système de communication suivant la revendication 1, 2 ou 3, caractérisé par le fait que la carte d'identité (A) de l'utilisateur est un support de données muni d'une surface structurée.

9. Système de communication suivant la revendication 6, 7 ou 8, caractérisé par le fait qu'une microplaquette comportant un microprocesseur et une mémoire (PROM) est intégrée dans la carte d'identité (A) de l'utilisateur.

10. Système de communication suivant l'une des revendications 1 à 9, caractérisé par le fait que la carte d'identité (A) de l'utilisateur est utilisée également directement pour un calcul des taxes d'utilisation.

11. Système de communication suivant l'une des revendications 1 à 10, caractérisé par le fait qu'un processus de sélection ne peut être exécuté que lorsque la carte d'identité (A) de l'utilisateur est enfichée dans le dispositif (L) de lecture de cartes d'identité du poste terminal d'abonné (TD, TF) considéré.

12. Système de communication suivant l'une des revendications 1 à 10, caractérisé par le fait que la taxe d'utilisation est calculée sur la base de la carte d'identité (A) de l'utilisateur, enfichée respectivement en dernier lieu, moyennant l'hypothèse qu'une touche de comptage a été préalablement enfoncée par l'utilisateur considéré.